# EUROPEAN PATENT APPLICATION

(11) **EP 2 677 168 A1**
(43) Date of publication of application: **25.12.2013**
(21) Application number: 12746812.2
(22) Date of filing: 30.01.2012
(51) Int. Cl.: F03D 9/00, F03D 11/00, H02J 3/38, H02M 5/293

(54) **MATRIX CONVERTER DEVICE FOR WIND-POWER ELECTRICITY-GENERATION, WIND-POWER ELECTRICITY-GENERATION DEVICE, WIND FARM, AND WIND TURBINE MANUFACTURING METHOD**

(30) Priority: 16.02.2011 WO PCT/JP2011/053294
(71) Applicant: Kabushiki Kaisha Yaskawa Denki, Kitakyushu-shi, Fukuoka 806-0004 (JP)
(72) Inventor: FUJII, Junji, Kitakyushu-shi, Fukuoka 806-0004 (JP); YAMAMOTO, Hitoshi, Kitakyushu-shi, Fukuoka 806-0004 (JP); OOYAMA, Tetsuo, Kitakyushu-shi, Fukuoka 806-0004 (JP); TANAKA, Takashi, Kitakyushu-shi, Fukuoka 806-0004 (JP)
(74) Representative: Grünecker, Kinkeldey, Stockmair & Schwanhäusser
(86) International application number: PCT/JP2012/052003
(87) International publication number: WO 2012/111416

(57) **Abstract**

A matrix converter apparatus for wind-power generation according to an embodiment includes a matrix converter and a controller. The matrix converter is controlled by the controller so as to fully convert electric power generated in a generator by rotating force of a wind turbine rotated by wind power to be supplied to a power grid.

## Description

### Field

Embodiments disclosed herein relate to a matrix converter apparatus for wind-power generation, a wind-power generator apparatus, a wind farm, and a method for manufacturing a wind turbine.

### Background

A wind-power generator apparatus generally includes a wind turbine and a generator, and converts mechanical energy of the wind turbine rotated by wind power to electrical energy by the generator.

The electrical energy output from the generator in the wind-power generator apparatus is supplied to a power grid via a power converter apparatus. Combination of a converter and an inverter is used for the power converter apparatus (for example, refer to Patent Literature 1). The converter converts alternating current power from the generator to direct current power. The inverter converts the direct current power from the converter to alternating current power.

### Citation List

### Patent Literature

Patent Literature 1: Japanese Patent Application Laid-open No. 2007-124779

### Summary

### Technical Problem

However, in a conventional power converter apparatus for wind-power generation, when wind is weak and the generator rotates at low speed, current concentration occurs such that current continuously flows in one or more switching elements therein for a long time. There has been a problem in the conventional power converter apparatus for wind-power generation such that the capacity of the switching element should be enough large for the current concentration.

An aspect of the embodiments is made in light of the above, and an object thereof is to provide a power converter for wind-power generation with a reduced capacity of switching elements, a wind-power generator apparatus, a wind farm, and a method for manufacturing a wind turbine.

### Solution to Problem

A matrix converter apparatus for wind-power generation according to an aspect of embodiments includes a matrix converter and a controller. The matrix converter fully converts electric power generated in a generator by rotating force of a wind turbine rotated by wind power and supplies the electric power to a power grid. The controller controls the matrix converter.

### Advantageous Effects of Invention

The use of the matrix converter apparatus for wind-power generation according to an aspect of the embodiments can reduce the capacity of switching elements.

### Brief Description of Drawings

FIG. 1 is a diagram illustrating a configuration of a wind-power generator apparatus according to a first embodiment.
FIG. 2A is a diagram illustrating a procedure for attaching a blade of a wind power generator according to the first embodiment.
FIG. 2B is a diagram illustrating the procedure for attaching the blade of the wind power generator according to the first embodiment.
FIG. 2C is a diagram illustrating the procedure for attaching the blade of the wind power generator according to the first embodiment.
FIG. 3 is a block diagram of the wind-power generator apparatus according to the first embodiment.
FIG. 4 is a block diagram illustrating a configuration of a matrix converter according to the first embodiment.
FIG. 5 is a diagram illustrating a configuration of a series-connected multi-level matrix converter with current rating increased by parallel connection.
FIG. 6 is a diagram illustrating an example of a configuration of a single-phase matrix converter illustrated in FIG. 4.
FIG. 7 is a diagram illustrating an example of a configuration of a power factor controller.
FIG. 8 is a diagram for explaining an example of the matrix converter controlled by a control signal generator.
FIG. 9 is another block diagram of the wind-power generator apparatus according to the first embodiment.
FIG. 10 is a diagram illustrating a procedure control in power failure.
FIG. 11 is a diagram illustrating an example of a configuration of a position controller.
FIG. 12 is a diagram illustrating an example of a configuration of a discharge command unit.
FIG. 13 is a diagram illustrating an example of a configuration of a power switch unit.
FIG. 14 is a diagram illustrating an example of a configuration of a voltage switch command unit illustrated in FIG. 13.
FIG. 15 is a diagram illustrating a configuration of a wind farm according to a second embodiment.

### Description of Embodiments

The following describes embodiments of a matrix converter apparatus for wind-power generation, a wind-power generator apparatus, a wind farm, and a method for manufacturing a wind turbine disclosed in the present application in detail with reference to the accompanying drawings. Note that the present invention is not limited to the embodiments.

### (First embodiment)

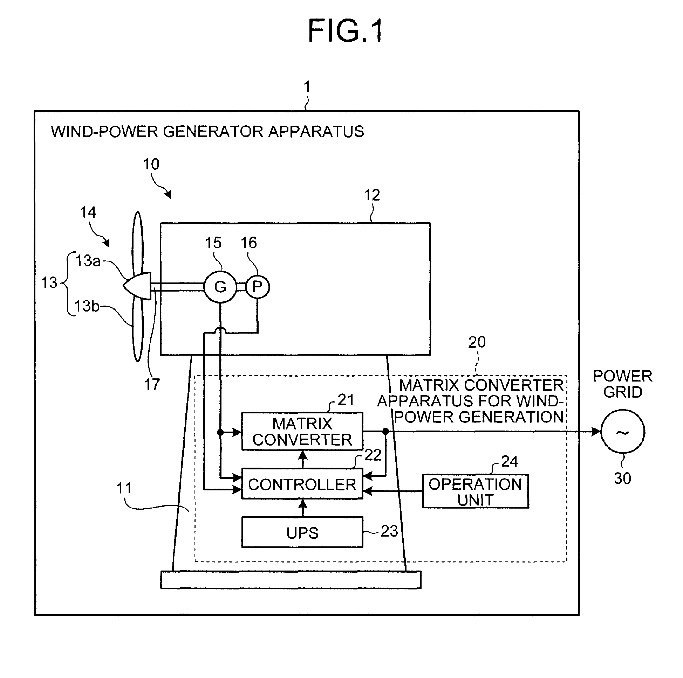

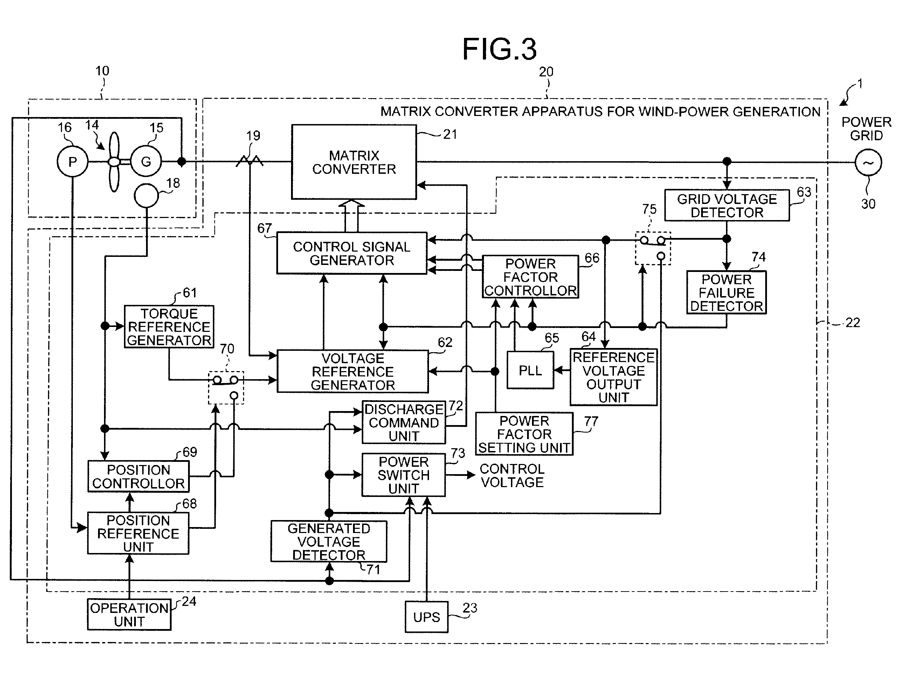

FIG. 1 is a diagram illustrating a configuration of a wind-power generator apparatus according to a first embodiment. As illustrated in FIG. 1, a wind-power generator apparatus 1 according to the first embodiment includes a wind power generator 10 and a matrix converter apparatus for wind-power generation 20, and supplies electric power to a power grid 30. For the sake of clarity, some configurations are not illustrated in FIG. 1. The configurations that are not illustrated will be described with reference to FIG. 3 and so on.

The wind power generator 10 includes a tower body 11a and a wind turbine 14 having a nacelle 12 and a rotor 13. The nacelle 12 is rotatably supported by the tower body 11. The rotor 13 includes a rotor hub 13a and a plurality of blades 13b attached to different positions of the rotor hub 13a.

A generator 15 connected to the rotor 13 via a shaft 17 is accommodated in the nacelle 12 of the wind turbine 14. The generator 15 is a rotational machine that may be also used as a motor and, for example, a rotational machine of permanent magnet type.

A position detector 16 that detects a rotational position of the wind turbine 14 rotated by wind power is accommodated in the nacelle 12. For example, the position detector 16 detects the rotational position of the wind turbine 14 by detecting a rotational position of the shaft 17.

On the other hand, the matrix converter apparatus for wind-power generation 20 is a power converter apparatus for wind-power generation and includes a matrix converter 21, a controller 22, an uninterruptible power supply (hereinafter, referred to as a UPS) 23, and an operation unit 24. The matrix converter apparatus for wind-power generation 20 is arranged in the tower body 11. When voltage of the power grid 30 is higher than voltage of the generator 15, current flowing through a power line cable between the matrix converter 21 and the power grid 30 is smaller than current flowing through a power line cable between the generator 15 and the matrix converter 21. Accordingly, in the wind-power generator apparatus 1, diameter of a cable that is pulled out from the tower body 11 may be decreased.

The matrix converter 21 is a power converter that fully and bidirectionally converts electric power between the generator 15 of the wind power generator 10 and the power grid 30. The matrix converter 21 does not adjust only frequency of an output from the generator directly connected to the power grid such as a DFIG (duplex feeding induction generator) type. That is, the matrix converter 21 is interposed between the generator 15 and the power grid 30, and bidirectionally converts the electric power between the generator 15 and the power grid 30.

The controller 22 outputs a control signal to the matrix converter 21 and makes bidirectional electric power conversion between the generator 15 and the power grid 30. For example, the controller 22 outputs a control signal to the matrix converter 21 based on an operation for the operation unit 24, and causes the matrix converter 21 to perform power generation control process and position control process of wind turbine.

When the power generation control process is selected by operating the operation unit 24, the controller 22 performs the power generation control process. When the position control process of wind turbine is selected by operating the operation unit 24, the controller 22 performs the position control process of wind turbine. The power generation control process is a process of converting the electric power output from the generator 15 to the electric power allowable for the power grid 30 and outputting the converted electric power to the power grid 30. The position control process of wind turbine is a process of converting the electric power output from the power grid 30 to be supplied to the generator 15, and operating the generator 15 as a motor.

The position control process of wind turbine is performed, for example, when the blade 13b is attached to the rotor hub 13a, when the blade 13b is removed from the rotor hub 13a, and when inspection or maintenance of the blade 13b is performed. The controller 22 performs the position control process of wind turbine, so that the rotational position of the wind turbine coincides with a target position designated by operating the operation unit 24, for example.

Information about the target position is set in the controller 22 in advance for each blade 13b as a position where the blade 13b can be easily attached or removed, and is selected by operating the operation unit 24. Usage of position information input by operating the operating unit 24 as the target position enables arbitrary target position setting.

Based on the information about the rotational position of the wind turbine 14 detected by the position detector 16 (hereinafter, referred to as a "detected position") and the target position designated by operating the operation unit 24, the controller 22 generates a control signal such that the rotational position of the wind turbine 14 coincides with the target position. The controller 22 outputs the generated control signal to the matrix converter 21.

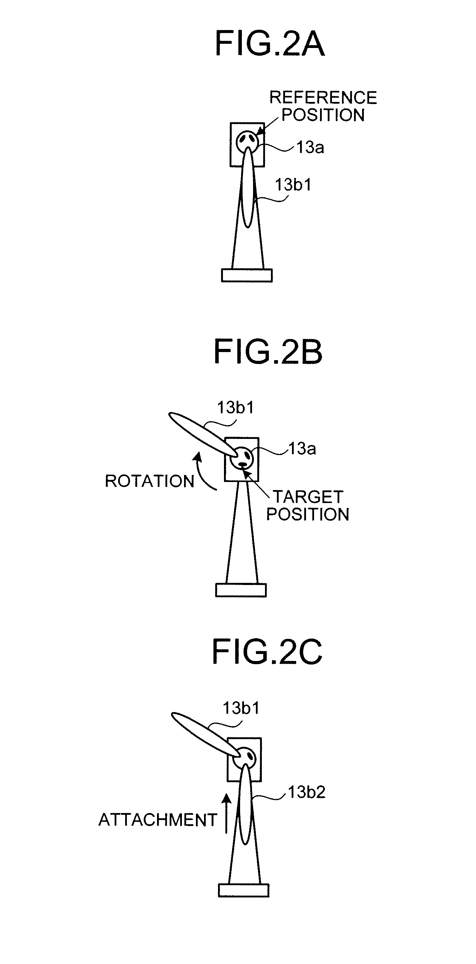

A method for attaching the blade 13b in the wind power generator 10 will be described. FIGS. 2A to 2C are diagrams illustrating a procedure for attaching the blade 13b to the wind power generator 10. Although FIGS. 2A to 2C illustrate a procedure for attaching a blade 13b2 to the rotor hub 13a after attaching a blade 13b1 to the rotor hub 13a, any of the blades 13b may be similarly attached.

In the state illustrated in FIG. 2A, an operator operates the operation unit 24 to designate the position control process of wind turbine, and selects the blade 13b2 (refer to FIG. 2C) as a blade to be attached to the rotor hub 13a. Accordingly, the controller 22 designates a target position where the blade 13b2 is attached. The position detector 16 detects the rotational position of the wind turbine 14, and a detection result thereof is input to the controller 22 from the position detector 16.

The controller 22 detects a difference between the rotational position of the wind turbine 14 detected by the position detector 16 and the target position designated by the operation unit 24. Then the controller 22 generates a control signal so as to cause the rotational position of the wind turbine 14 to coincide with the target position based on the difference between the rotational position of the wind turbine 14 and the target position, and inputs the control signal to the matrix converter 21. Accordingly, as illustrated in FIG. 2B, the rotational position of the wind turbine 14 approaches to the target position, and finally the wind turbine 14 stops at the target position.

If the target position is not further changed, the matrix converter 21 continuously outputs the control signal that causes the rotational position of the wind turbine 14 to coincide with the target position, and as a result, the wind turbine 14 continues to stop at the target position. Thereafter, as illustrated in FIG. 2C, the blade 13b2 is attached to the wind turbine 14 that remains stationary. Continuing of wind turbine 14 to stop at the target position makes it easy for blade 13b2 to be attached to the rotor hub 13a.

Although the procedure for attaching the blade 13b to the wind turbine 14 is described above, the controller 22 may also cause the rotational position of the wind turbine 14 to coincide with the target position in removing the blade 13b from the wind turbine 14. Accordingly, the wind turbine 14 may remains stationary at the target position, and the removal of the blade 13b may be easy similarly to the attachment of the blade.

As described above, in the matrix converter apparatus for wind-power generation 20 according to the first embodiment, the electric power may be fully and bidirectionally converted between the generator 15 of the wind power generator 10 and the power grid 30. In addition, the matrix converter apparatus for wind-power generation 20 may cause the rotational position of the wind turbine 14 to coincide with the target position by the position control process of wind turbine that controls the matrix converter 21 such that the rotational position of the wind turbine 14 is controlled using the generator 15 as a motor. Therefore, assembly work or maintenance work of the wind turbine 14 may be easily performed.

In the above description, the rotational position of the wind turbine 14 is detected by the position detector 16. However, the detection device of the rotational position of the wind turbine 14 is not limited to the position detector 16. For example, a rotation quantity obtained by integrating a detected rotational speed of the generator 15 output from a speed detector such as a rotary encoder may be detected as a rotational position of the wind turbine 14.

### [Configuration of wind-power generator apparatus 1]

Hereinafter, a configuration of the wind-power generator apparatus 1 according to the first embodiment will be described in further detail with reference to drawings. FIG. 3 is a block diagram of the wind-power generator apparatus 1 according to the first embodiment.

As illustrated in FIG. 3, the wind-power generator apparatus 1 includes the wind power generator 10 and the matrix converter apparatus for wind-power generation 20. The wind power generator 10 includes a speed detector 18 in addition to the above-described generator 15 and the position detector 16. The speed detector 18 detects the rotational speed of the generator 15 and outputs the detected rotational speed value to the matrix converter apparatus for wind-power generation 20 as a detected speed.

The matrix converter apparatus for wind-power generation 20 includes a generator current detector 19, the matrix converter 21, the controller 22, the UPS 23, and the operation unit 24. The controller 22 is operated by using the electric power generated by the generator 15 in the wind power generator 10. However, when the electric power cannot be obtained from the generator 15, the controller 22 is operated by receiving the electric power supplied from the UPS 23 as described later.

The generator current detector 19 detects the current flowing between the matrix converter 21 and the generator 15, and outputs an instantaneous value of the detected current to the matrix converter apparatus for wind-power generation 20 as a detected generator current. As the generator current detector 19, for example, a current sensor utilizing a Hall element that is a magnetoelectric conversion element may be employed.

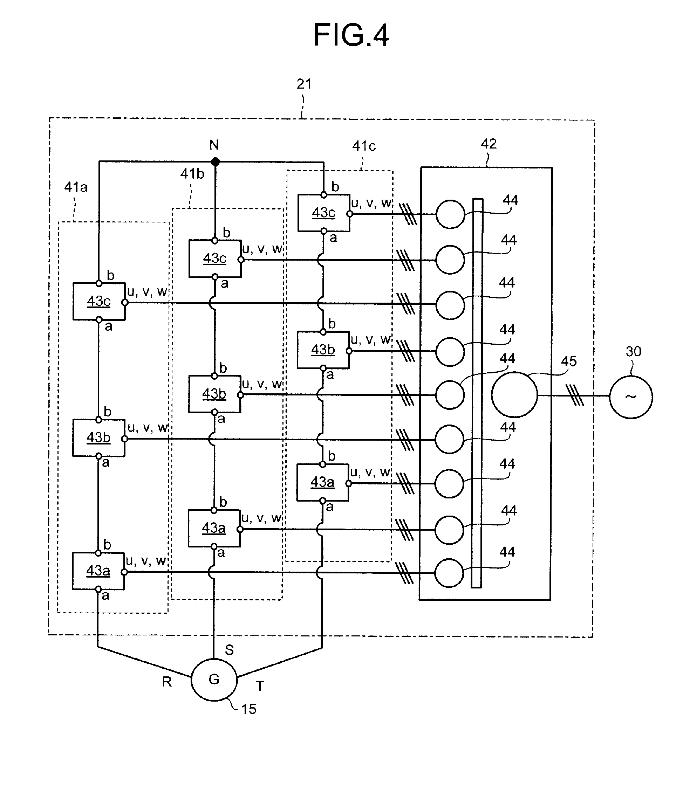

The matrix converter 21 is configured such that the electric power may be fully and bidirectionally converted between the generator 15 and the power grid 30. FIG. 4 is a block diagram illustrating a configuration of the matrix converter 21.

As illustrated in FIG. 4, the matrix converter 21 is a series-connected multi-level matrix converter including an R-phase unit 41a, an S-phase unit 41b, a T-phase unit 41c, and a three-phase transformer 42. The R-phase unit 41a is connected between an R-phase of the generator 15 and a neutral point N, the S-phase unit 41b is connected between an S-phase of the generator 15 and the neutral point N, and the T-phase unit 41c is connected between a T-phase of the generator 15 and the neutral point N.

Each of the units 41a to 41c comprises series connection of a plurality of single-phase matrix converters 43a to 43c. Specifically, a terminal a of the single-phase matrix converter 43a is connected to the generator 15, a terminal b of the single-phase matrix converter 43a is connected to a terminal a of the single-phase matrix converter 43b. A terminal b of the single-phase matrix converter 43b is connected to a terminal a of the single-phase matrix converter 43c, and a terminal b of the single-phase matrix converter 43c is connected to the neutral point N.

On the other hand, three terminals u, v, and w of each of the single-phase matrix converters 43a to 43c are connected to each of secondary windings 44, separated from each other, of the three-phase transformer 42. On the other hand, a primary winding 45 of the three-phase transformer 42 is connected to the power grid 30. As a combining part, the three-phase transformer 42 combines the electric power output from the single-phase matrix converters 43a to 43c while insulating them from each other, and boosts the voltage of the combined electric power to the voltage of the power grid 30. The primary winding 45 delivers the boosted voltage to the power grid 30.

As described above, in the matrix converter apparatus for wind-power generation 20, the matrix converter 21 constitutes the series-connected multi-level matrix converter. Therefore, harmonics of the current flowing through both the generator 15 and the power grid 30 can be reduced.

In each of the units 41a to 41c, the three single-phase matrix converters 43a to 43c are serially connected, and each of the single-phase matrix converters 43a to 43c outputs voltage obtained by dividing voltage generated by the generator 15 by approximately 3. Surge voltage output to the generator 15 from each of the single-phase matrix converters 43a to 43c is proportional to output voltage of each of the single-phase matrix converters 43a to 43c. Therefore, in the matrix converter apparatus for wind-power generation 20, a ratio of the surge voltage with respect to the voltage generated by the generator 15 is smaller than that in the case where the circuit configuration of the phase unit2 41a to 41c are not series connections of the single-phase matrix converters. As a result, influence on the generator 15 by the surge voltage can be reduced. The influence on the generator 15 by the surge voltage can be reduced as the number of serial connections of the single-phase matrix converters is increased.

Wire diameter of the primary winding 45 in the three-phase transformer 42 can be reduced because of boosted primary voltage of the three-phase transformer 42, so that maintainability can be improved. In addition, the terminals u, v, and w of each of the single-phase matrix converters 43a to 43c may be independently connected to each secondary winding 44 and the three-phase transformer 42 may be configured such that constant phase differences are generated among voltages output from the respective secondary windings 44. Accordingly, for example, noise and the like generated in each of the single-phase matrix converters 43a to 43c may be cancelled.

Even if the rotational speed of the generator 15 is low and, for example, even if the frequency of the generated voltage output from the generator 15 is zero, the matrix converter 21 may perform power conversion and output the converter power to the power grid 30. The reason is that, if the frequency of the generator 15 is zero, the matrix converter apparatus for wind-power generation 20 switches the switching element that turns on and off corresponding to the phase of the voltage of the power grid 30, so that the current concentration in which the current continuously flows through a specific switching element is prevented. Therefore, the rotational position of the wind turbine 14 may remain stationary with a reduced capacity of the switching element (bidirectional switches 53a to 53f to be described later).

A current rating of each of the units 41a to 41c may be doubled by connecting a single-phase matrix converter to each of the single-phase matrix converters 43a to 43c in parallel. When the matrix converters are connected in parallel, a capacitor having large capacity does not exist unlike in the case where the inverters are connected in parallel. Therefore, inductance of the secondary winding 44 of the three-phase transformer 42 connected to the power grid 30 side or a filter reactor on the power grid 30 side has an effect to balance the current on the generator 15 side, and a reactor for balancing the current may be omitted.

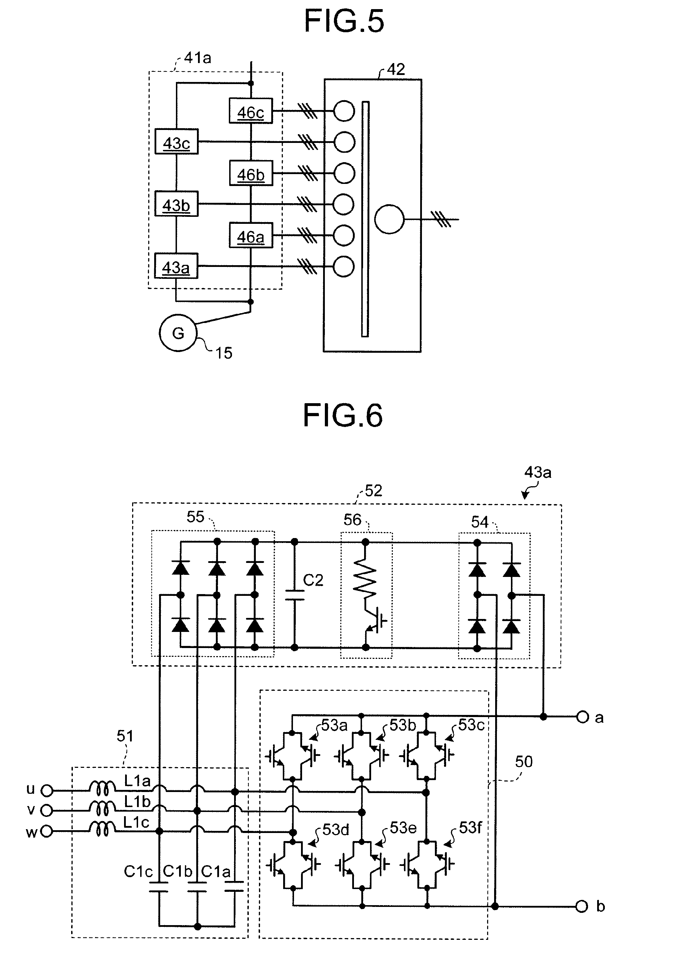

For example, as illustrated in FIG. 5, in each of the units 41a to 41c, single-phase matrix converters 46a to 46c can be connected to the single-phase matrix converters 43a to 43c in parallel, respectively. FIG. 5 is a diagram illustrating a configuration of the series-connected multi-level matrix converter with current rating increased by the parallel connection. Although configurations of the S-phase unit 41b and the T-phase unit 41c are not illustrated in FIG. 5, they are similar to that of the R-phase unit 41a. As number of single-phase matrix converters that are connected in parallel are increased, the current rating of each of the units 41a to 41c may also be increased.

The matrix converter 21 may not be the series-connected multi-level matrix converter. For example, the matrix converter 21 may be a parallel multiplex matrix converter in which a plurality of matrix converters are connected in parallel, and the reactor for balancing the current may be omitted.

Configurations of the single-phase matrix converters 43a to 43c will be described. The respective single-phase matrix converters 43a to 43c have the same configuration, so that the configuration of the single-phase matrix converter 43a will be described herein. FIG. 6 is a diagram illustrating an example of a configuration of the single-phase matrix converter 43a in FIG. 4.

As illustrated in FIG. 6, the single-phase matrix converter 43a includes a single-phase matrix converter circuitry 50, a filter 51, and a snubber circuit 52.

The single-phase matrix converter circuitry 50 includes the bidirectional switches 53a to 53f. The terminal a of the single-phase matrix converter 43a is connected to each end of the bidirectional switches 53a to 53c, and the terminal b of the single-phase matrix converter 43a is connected to each end of the bidirectional switches 53d to 53f.

The other end of the bidirectional switch 53a is connected to the other end of the bidirectional switch 53d, and further connected to a terminal w via the filter 51. Similarly, the other end of the bidirectional switch 53b is connected to the other end of the bidirectional switch 53e, and further connected to a terminal v via the filter 51. In addition, the other end of the bidirectional switch 53c is connected to the other end of the bidirectional switch 53f, and further connected to a terminal u via the filter 51.

For example, the bidirectional switches 53a to 53f may include two elements in which switching elements in a single direction are connected in parallel in a reverse direction. A semiconductor switch such as an IGBT (Insulated Gate Bipolar Transistor) is exemplified as the switching element, and specifically, the semiconductor switch having reverse-blocking capability may be used as the switching element. A current-carrying direction is controlled by inputting a signal to a gate of each of the semiconductor switches to turn it on and off.

The filter 51 reduces harmonic current generated by switching of the single-phase matrix converter circuitry 50, and includes capacitors C1a to C1c and inductances (reactance) L1a to L1c. The inductances L1a to L1c are connected between the single-phase matrix converter circuitry 50 and the terminals u, v, and w, and one end of each of the capacitors C1a to C1c is connected to the terminals u, v, and w, and the other ends are connected in common.

As illustrated in FIG. 4, the terminals u, v, and w of the single-phase matrix converter 43a are connected to the three-phase transformer 42. That means an inductance component is connected to the terminals u, v, and w. Accordingly, the three-phase transformer 42 can undertake a part or all of functions of the inductances L1a to L1c, so that the size and cost of the filter 51 may be saved. As described above, the series-connected multi-level matrix converter has an advantage in downsizing and cost reduction of the single-phase matrix converter 43a.

Next, the snubber circuit 52 illustrated in FIG. 6 will be described. As illustrated in FIG. 6, the snubber circuit 52 includes a generator-side full-wave rectifying circuit 54, a power-grid-side full-wave rectifying circuit 55, a capacitor C2, and a discharge circuit 56. The snubber circuit 52 converts the surge voltage generated between the terminals of the single-phase matrix converter circuitry 50 to direct-current voltage by the generator-side full-wave rectifying circuit 54 and the power-grid-side full-wave rectifying circuit 55, accumulates the direct-current voltage in the capacitor C2, and discharge the accumulated direct-current voltage by the discharge circuit 56.

A discharge by the discharge circuit 56 is performed when the voltage of the capacitor C2 becomes a predetermined value or more. The discharge circuit 56 is operated by a discharge command output from the controller 22 when a change rate of the voltage generated by the generator 15 becomes a predetermined value or more, or when a change rate of the rotational speed of the generator 15 becomes predetermined value or more. The discharge circuit 56 is configured by serially connecting the switching element such as the IGBT and a resistor, and connected in parallel with the capacitor C2.

Returning to FIG. 3, a configuration of the controller 22 will be described. The controller 22 includes a torque reference generator 61, a voltage reference generator 62, a grid voltage detector 63, a reference voltage output unit 64, a PLL (Phase Locked Loop) 65, a power factor controller 66, a control signal generator 67, and a power factor setting unit 77.

The torque reference generator 61 generates and outputs a torque reference for determining running torque of the generator 15. Specifically, the torque reference generator 61 acquires the detected speed that is information about the rotational speed of the generator 15 from the speed detector 18, and outputs the torque reference according to the rotational speed of the generator 15. Accordingly, electric power may be efficiently generated according to the rotational speed of the wind turbine 14.

The voltage reference generator 62 generates a voltage reference for the generator 15 according to the input torque reference and outputs the voltage reference to the control signal generator 67. For example, when acquiring the torque reference from the torque reference generator 61, the voltage reference generator 62 generates the voltage reference based on the torque reference and outputs the voltage reference to the control signal generator 67. In this case, as one exemplary method, the voltage reference generator 62 acquires a detected generator current from the generator current detector 19 to generate the voltage reference, and extracts a torque current component that contributes to torque generation from the detected generator current. The voltage reference generator 62 generates the voltage reference based on a deviation between the torque current component extracted as described above and the torque reference acquired from the torque reference generator 61.

The grid voltage detector 63 monitors a connecting point between the matrix converter 21 and the power grid 30 to detect the voltage of the power grid 30, and outputs an instantaneous value of the detected voltage to the reference voltage output unit 64 as a detected grid voltage. Accordingly, the detected grid voltage is output from the grid voltage detector 63 to the reference voltage output unit 64. The reference voltage output unit 64 outputs the detected grid voltage acquired from the grid voltage detector 63 to a PLL 65.

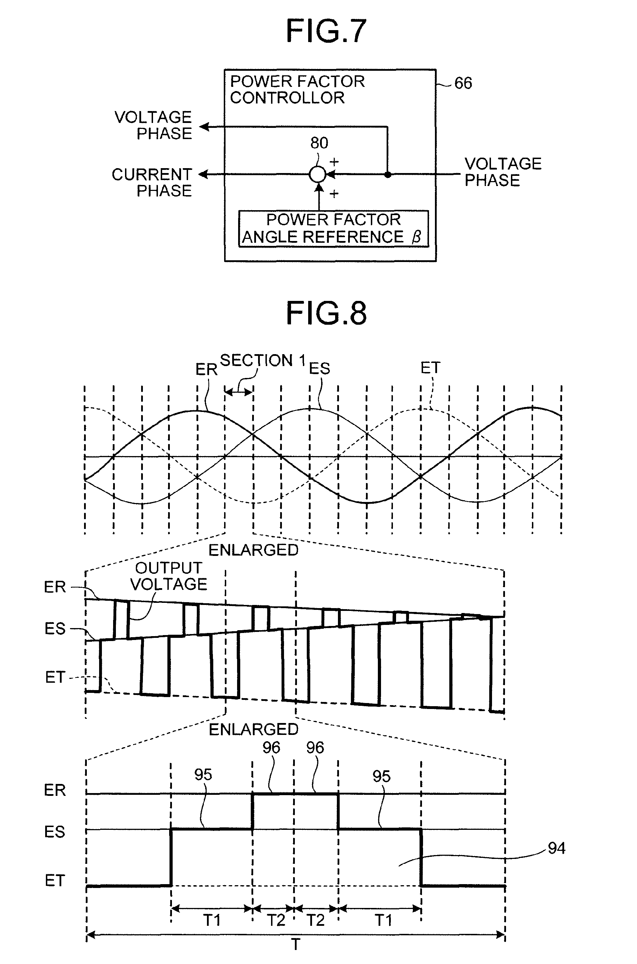

The PLL 65 generates information about a voltage phase of the power grid 30 from a three-phase voltage value of the power grid 30, and output the information to the power factor controller 66. The power factor controller 66 generates information about a current phase based on the input information about the voltage phase of the power grid 30. The PLL 65 is an example of the voltage phase generator. FIG. 7 is a diagram illustrating an example of a configuration of the power factor controller 66.

As illustrated in FIG. 7, the power factor controller 66 includes an adder 80 that adds a power factor angle reference β to the information about the voltage phase input from the PLL 65 and generates the current phase of the power grid 30. The power factor controller 66 outputs the input information about the voltage phase of the power grid 30 and information about the generated current phase to the control signal generator 67 (refer to FIG. 3). Accordingly, the power factor on the power grid 30 side is set.

The power factor angle reference β is set by the power factor setting unit 77 (refer to FIG. 3). For example, the power factor setting unit 77 determines the power factor angle reference β based on information set by an operation system of the power grid 30. Alternatively, the power factor setting unit 77 may determine the power factor angle reference β according to a state of the power grid 30.

The control signal generator 67 illustrated in FIG. 3 generates a control signal of a PWM pulse pattern so that the matrix converter 21 performs electric power conversion, and outputs the generated control signal to the matrix converter 21. The control signal generator 67 generates the control signal based on, for example, the voltage reference acquired from the voltage reference generator 62, information about the voltage phase acquired from the power factor controller 66, and information about the current phase.

The bidirectional switches 53a to 53f in the matrix converter 21 are turned on or off based on the control signal of the PWM pulse pattern output from the control signal generator 67. The matrix converter 21 performs the electric power conversion. The matrix converter 21 directly switches input voltage by the bidirectional switches 53a to 53f and performs control both on the generator 15 side and on the power grid 30 side. Accordingly, the matrix converter 21 may convert and output generated power of the generator 15 corresponding to the voltage and the frequency on the power grid 30.

FIG. 8 is a diagram for explaining an example of the matrix converter 21 controlled by the control signal generator 67. As illustrated in FIG. 8, three-phase alternating-current voltage (R-phase voltage ER, S-phase voltage ES, and T-phase voltage ET) output from the generator 15 is selected by the control signal of the PWM pulse pattern, and pulse-shape output voltage is output to the power grid 30 side.

Herein, by the control signal output from the control signal generator 67, a minimum voltage phase (a base phase) and an intermediate voltage phase are selected, the minimum voltage phase and a maximum voltage phase are selected, and thereafter, the minimum voltage phase and the intermediate voltage phase are selected again. Accordingly, voltage fluctuation per one switching is smaller than that in a general inverter, and as a result, the surge voltage and leakage current can be reduced.

As illustrated in the example of FIG. 8, in a section 1 in the drawing, the T-phase voltage ET as a base phase and the S-phase voltage ES as the intermediate voltage phase are selected, and a first pulse 95 is output to the power grid 30 as output voltage. Thereafter, the T-phase voltage ET and the R-phase voltage ER as the maximum voltage phase are selected, and a second pulse 96 is output to the power grid 30 as the output voltage. Subsequently, the T-phase voltage ET and the S-phase voltage ES are selected again, and the first pulse 95 is output to the power grid 30 as the output voltage.

As described above, the control signal generator 67 refers to a voltage detection value of the power grid 30 acquired from the grid voltage detector 63, and generates a PWM pulse corresponding to the voltage reference input from the voltage reference generator 62. The control signal generator 67 controls a output line-to-line voltage value by an area of the PWM pulse, so that input current that is the current on the power grid 30 side becomes close to a sinusoidal wave by using a ratio of the PWM pulse. Herein, the ratio of the PWM pulse is a ratio between duration of the first pulse formed by the minimum voltage phase and the intermediate voltage phase, or the maximum voltage phase and the intermediate voltage phase among the grid voltage values, and duration of the second pulse formed by the minimum voltage phase and the maximum voltage phase.

For example, a PWM pulse 94 illustrated in FIG. 8 is formed by the first pulse 95 and the second pulse 96, and a waveform of the input current is changed by changing a ratio α between a period T1 of the first pulse 95 and a period T2 of the second pulse 96. For example, a ratio α is changed according to a phase of input voltage that is voltage of the power grid 30, while the ratio α is determined corresponding to a ratio between the voltage value of the maximum voltage phase or the minimum voltage phase and the voltage value of the intermediate voltage phase. In addition, whether the current flows continuously during a control cycle T in the maximum voltage phase or the minimum voltage phase, is determined according to the phase of the input voltage. Then a waveform of the input current may be set to a sinusoidal wave whose phase is equal to that of the input voltage and a power factor may be set to 1.

The control signal generator 67 determines the ratio α between the PWM pulses according to the current phase output from the power factor controller 66, and determines whether the current flows continuously during the control cycle T in the maximum voltage phase or the minimum voltage phase. Accordingly, a control signal which makes the power factor on the power grid 30 side equal to a power factor set by the power factor setting unit 77 is output to the matrix converter 21.

Returning to FIG. 3, the controller 22 will be further described. The controller 22 further includes a position reference unit 68, a position controller 69, a switch 70, a generated voltage detector 71, a discharge command unit 72, a power switch unit 73, a power failure detector 74, and a state quantity switching unit 75. The controller 22 performs various control processes such as control in power failure, rotational position control of wind turbine, residual power discharge control, and power switching control. Hereinafter, these control processes will be specifically described.

### (Control in power failure)

First, the control in power failure performed by the controller 22 will be described. To perform the control in power failure, as illustrated in FIG. 3, the controller 22 includes the power failure detector 74, the state quantity switching unit 75, and the reference voltage output unit 64.

The power failure detector 74 detects that power failure occurs in the power grid 30 from the grid voltage detected by the grid voltage detector 63, and generates a power failure detection signal. The power failure detector 74 outputs the generated power failure detection signal to the voltage reference generator 62, the power factor controller 66, the control signal generator 67, and the state quantity switching unit 75. In this case, the power failure detector 74 detects power failure in the power grid 30 from the detected grid voltage, but the method for detecting power failure is not limited thereto. For example, the power failure detector 74 may detect power failure in the power grid 30 based on a value of current flowing between the matrix converter 21 and the power grid 30 (hereinafter, also referred to as a "grid current value").

As a method for detecting power failure in the power grid 30 based on the detected grid voltage or the grid current value, a well-known method may be employed. For example, a signal generator for detecting power failure (not illustrated) is provided in the matrix converter 21, and the signal for detecting power failure is superimposed on the voltage output from the matrix converter 21 to the power grid 30. When the signal for detecting power failure is detected by the grid voltage detector 63, the power failure detector 74 detects that power failure occurs in the power grid 30. In another example, the power failure detector 74 may detect that power failure occurs in the power grid 30 by comparing a phase of the voltage or current output from the matrix converter 21 with a phase of the voltage or current in the power grid 30.

Instead of detecting power failure in the power grid 30 by detecting the voltage of the power grid 30 and the current flowing to the power grid 30, the power failure detector 74 may detect power failure in the power grid 30 when power failure information (not illustrated) sent from the power grid 30 side is acquired.

The generated voltage detector 71 detects output voltage of (voltage generated by) the generator 15 and outputs an instantaneous value of the detected voltage to the state quantity switching unit 75 as the detected generated voltage.

When the power failure detection signal is output from the power failure detector 74, the state quantity switching unit 75 switches a switch included therein, and switches a signal output to the reference voltage output unit 64 and the control signal generator 67 from the detected grid voltage to the detected generated voltage. In this way when power failure occurs, the reference voltage output unit 64 and the control signal generator 67 starts to operate with the voltage of the generator 15, not with the voltage of the power grid 30.

When the power failure detection signal is output from the power failure detector 74, the voltage reference generator 62 switches a generated voltage reference from a voltage reference for the above-described generator 15 to a voltage reference for the power grid 30. The voltage reference for the power grid 30 is, for example, corrected null voltage based on a deviation between the torque reference and the torque current component. In this case, the voltage reference generator 62 acquires the detected generator current from the generator current detector 19, and extracts a torque current component that contributes to torque generation from the detected generator current. The voltage reference generator 62 calculates a deviation between the torque current component extracted as described above and the torque reference acquired from the torque reference generator 61, corrects the null voltage based on the deviation, and generates the voltage reference for the power grid 30. The null voltage is provided on the assumption that the voltage of the power grid 30 becomes null when power failure occurs.

The voltage reference generator 62 may also generate the voltage reference for the power grid 30 using the detected grid voltage. For example, the voltage reference generator 62 may set the voltage that is detected by the grid voltage detector 63 and corrected based on the deviation between the torque reference described above and the torque current component as the voltage reference for the power grid 30.

When the power failure detection signal is input from the power failure detector 74, the power factor controller 66 outputs a current phase required to drive the generator 15 as a current phase output to the control signal generator 67. For example, if the generator 15 is a rotational machine of permanent magnet type, the current phase output to the control signal generator 67 is set to be a value equal to the voltage phase of the generator 15 input from the PLL 65. If the generator 15 includes an excitation current component and a torque current component in the current like an induction machine, the torque current component has the same phase as that of the voltage of the generator 15, and the excitation current component has the phase difference of 90 degrees from the torque current component. The power factor controller 66 acquires a reference value Iq of the torque current component and a reference value Iq of the excitation current component from the voltage reference generator 62 (not illustrated), and sets an angle obtained by tan⁻¹(Id/Iq) to the power factor angle reference β. The power factor controller 66 adds the power factor angle reference β to the voltage phase of the generator 15, and generates a current phase output to the control signal generator 67. While the power failure detection signal is input, the power factor controller 66 outputs the thus generated current phase to the control signal generator 67.

When the power failure detection signal is input from the power failure detector 74, the control signal generator 67 treats the voltage reference from the voltage reference generator 62 as the voltage reference to the power grid 30, refers to the detected generated voltage instead of the detected grid voltage, and generates a PWM pulse corresponding to the voltage reference input from the voltage reference generator 62, and the voltage phase and the current phase input from the power factor controller 66. In addition, the bidirectional switches 53a to 53f in the matrix converter 21 are selected so that voltage is output to the power grid 30 based on the generated voltage value, and a PWM pulse signal is distributed to the selected bidirectional switch. Accordingly, the matrix converter 21 can continue operation even when power failure occurs while flowing current to the generator 15 and generating torque equal to the torque reference during voltage drop of the power grid 30 immediately after the power failure occurs, during complete power failure when the voltage of the power grid 30 becomes null, and during voltage build-up of the power grid 30 at the time of restoration of power.

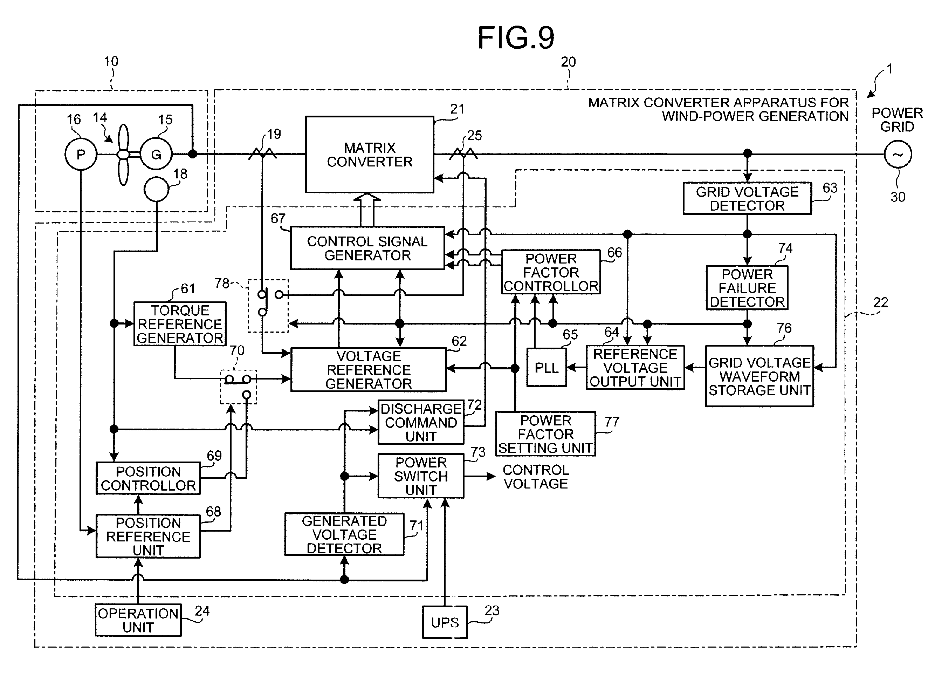

In a configuration of the matrix converter apparatus for wind-power generation 20 other than the example illustrated in FIG. 3, the control in power failure may be performed. For example, the configuration may be as illustrated in FIG. 9. FIG. 9 is another block diagram of the wind-power generator apparatus according to the first embodiment. The matrix converter apparatus for wind-power generation 20 illustrated in FIG. 9 further includes a grid current detector 25 and a state quantity switching unit 78 in addition to the generator current detector 19. In the matrix converter apparatus for wind-power generation 20 illustrated in FIG. 9, regardless of the power failure detection signal from the power failure detector 74, the voltage detection value of the power grid 30 acquired by the grid voltage detector 63 is output to the reference voltage output unit 64, the power factor controller 66, and the control signal generator 67.

The grid current detector 25 detects current flowing between the matrix converter 21 and the power grid 30, and outputs an instantaneous value of the detected current as the detected grid current to the controller 22. For example, as the grid current detector 25, a current sensor that detects current utilizing a Hall element that is a magnetoelectric conversion element can be used.

The state quantity switching unit 78 acquires the detected generator current from the generator current detector 19 and the detected grid current from the grid current detector 25. When the power failure detection signal is output from the power failure detector 74, the state quantity switching unit 78 switches the detected generator current to the detected grid current and outputs the selected signal to the voltage reference generator 62.

When the power failure detection signal is input from the power failure detector 74, the voltage reference generator 62 uses a power failure grid current reference held by itself instead of the torque reference from the torque reference generator 61, and generates a voltage reference for the generator 15 based on the power failure grid current reference and the detected grid current. On the other hand, when the power failure detection signal is not input from the power failure detector 74, the voltage reference generator 62 generates, for example, the voltage reference based on the deviation between the torque current component extracted from the detected generator current and the torque reference acquired from the torque reference generator 61, as described above.

The control signal generator 67 generates a control signal that causes the matrix converter 21 to perform electric power conversion based on the voltage reference for the generator 15 output from the voltage reference generator 62, and outputs the generated control signal to the matrix converter 21. Accordingly, the matrix converter 21 may continue operation even when power failure occurs while flowing current to the power grid 30 corresponding to the grid current reference in power failure.

In this case, a detected grid voltage output from the reference voltage output unit 64 is an abnormal value because of the power failure. Even in such a case, it may be possible to configure such that the PLL 65 continues to output information about the voltage phase of the power grid 30 by gain setting and the like in the PLL 65 even when power failure occurs.

In addition, as illustrated in FIG. 9, a grid voltage waveform storage unit 76 may be provided that is a ring buffer for storing therein a voltage waveform of the power grid 30 detected for the latest predetermined cycles (for example, for five cycles) by the grid voltage detector 63. The grid voltage waveform storage unit 76 performs storage process for sequentially storing the grid voltage detection value detected by the grid voltage detector 63 while deleting the oldest stored grid voltage detection value. The grid voltage waveform storage unit 76 may store therein the voltage waveform for the latest predetermined time instead of the voltage waveform for the latest predetermined cycles.

In a state where the voltage waveform of the power grid 30 is stored, when the power failure detection signal is input from the power failure detector 74, the grid voltage waveform storage unit 76 stops the storage process and retains the stored state. In a state where the detected grid voltage acquired from the grid voltage detector 63 is output to the PLL 65, when the power failure detection signal is input from the power failure detector 74, the reference voltage output unit 64 reads out information about the voltage value from the grid voltage waveform storage unit 76 and outputs the information to the PLL 65.

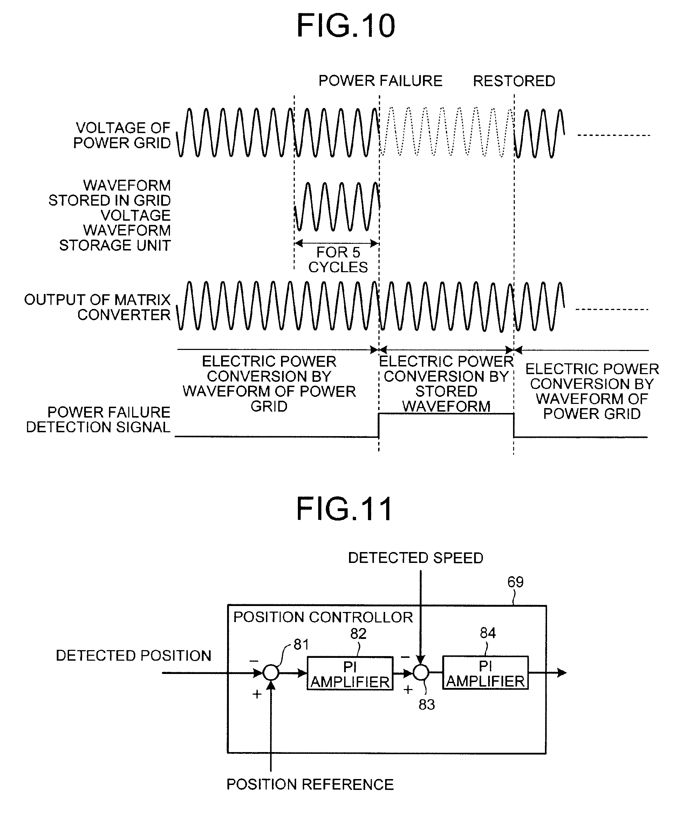

FIG. 10 is a diagram illustrating a control procedure in power failure. During the time when the electric power conversion from the generator 15 to the power grid 30 is performed by the matrix converter 21, as illustrated in FIG. 10, when power failure occurs in the power grid 30, a power failure detection signal (H-level signal) is output from the power failure detector 74. Accordingly, the storage process of the grid voltage waveform storage unit 76 is stopped, and the voltage value stored in the grid voltage waveform storage unit 76 is read out sequentially from the value before the specified cycles by the reference voltage output unit 64, and output to the PLL 65. Accordingly, the PLL 65 can acquire the information about the voltage value even after the power failure occurs, and can continue to output the information about the voltage phase of the power grid 30.

In this case, the power failure detector 74 outputs the power failure detection signal to the power factor controller 66 or the control signal generator 67 as described above, so that the power factor on the power grid 30 side is changed. For example, the power factor controller 66 changes a value of the power factor angle reference β when power failure occurs in the power grid 30, and adds the power factor angle reference β to the voltage phase input from the PLL 65 and generates information about the current phase. The control signal generator 67 changes the power factor on the power grid 30 side based on the information output from the power factor controller 66. Accordingly, even when momentary power failure occurs, the wind-power generator apparatus 1 can supply reactive power required by the power grid 30 by outputting current determined by the grid current reference in power failure and the changed power factor angle reference β for power grid while maintaining an interconnection of power grid without stopping the wind power generator 10.

As described above, the controller 22 acquires three or more state quantities among the current value and the voltage value of the power grid 30 and the current value and the voltage value of the generator 15. The controller 22 switches a combination of state quantity of the power grid 30 and state quantity of the generator 15 among the three or more state quantities by the state quantity switching unit 75 or the state quantity switching unit 78 based on a detection result by the power failure detector 74. Accordingly, the power failure control for continuing operation when power failure occurs may be performed.

A pattern of switching combinations of state quantities explained with reference to FIG. 3 and FIG. 9 is merely an example. The control in power failure for continuing operation when power failure occurs may be performed by using other pattern of switching combinations of state quantities based on the detection result by the power failure detector 74.

The controller 22 functions as a state quantity acquisition unit that acquires three or more state quantities among the current value and the voltage value of the power grid 30 and the current value and the voltage value of the generator 15. For example, the controller 22 acquires the current value of the power grid 30 as the detected grid current from the grid current detector 25 (refer to FIG. 9), and detects the voltage value of the power grid 30 as the voltage value of the power grid 30 by the grid voltage detector 63 (refer to FIG. 3 and FIG. 9). In addition, the controller 22 acquires the current value of the generator 15 as the detected generator current from the generator current detector 19 (refer to FIG. 3 and FIG. 9), and acquires the voltage value of the generator 15 as the detected generator voltage by the generated voltage detector 71 (refer to FIG. 3 and FIG. 9).

### (Rotational position control for wind turbine)

Next, rotational position control for wind turbine performed by the controller 22 will be described. To perform the rotational position control for wind turbine, as illustrated in FIG. 3 and FIG. 9, the controller 22 includes the position reference unit 68 and the position controller 69.

The position reference unit 68 stores a plurality of pieces of information about a position reference specifying the target position in a storage unit included therein, reads out the position reference corresponding to a rotational position of the wind turbine 14 designated by the operation unit 24 from the storage unit included therein, and outputs the position reference to the position controller 69. The position reference stored in the position reference unit 68 is information that defines an optimal position of the rotor hub 13a for attaching or removing each blade 13b (refer to FIG. 1) as the target position. Alternatively, a configuration may be employed in which the operation unit 24 directly designates the target position to stop the wind turbine 14 not only at the optimal rotational position for attaching or removing the blade 13b but also at an arbitrary rotational position.

For example, it is assumed that a rotational position at 0 degrees of the rotor hub 13a is the optimal position for attaching the blade 13b1 (refer to FIG. 2A), and a rotational position at 120 degrees of the rotor hub 13a is the optimal position for attaching the blade 13b2 (refer to FIG. 2C). It is further assumed that a rotational position at 240 degrees of the rotor hub 13a is the optimal position for attaching the remaining blade 13b.

In this case, the position reference unit 68 stores a position reference that specifies a rotational position at 0 degrees, 120 degrees, and 240 degrees of the rotor hub 13a as the target positions in the storage unit included therein. For example, when the blade 13b2 (refer to FIG. 2) is designated by the operation unit 24, the position reference unit 68 reads out a position reference specifying the rotational position at 240 degrees of the rotor hub 13a as the target position from the storage unit included therein, and outputs the position reference to the position controller 69.

The position reference unit 68 may generate a position reference corresponding to the rotational position of the rotor hub 13a designated by the operation unit 24 to be output to the position controller 69. Alternatively, the position reference unit 68 may store in the storage unit included therein position references, which correspond to respective rotational positions at 0 degrees or more and less than 360 degrees of the rotor hub 13a (for example, each rotational position per 1 degree), as the target positions. In this case, when the rotational position of the rotor hub 13a is designated by the operation unit 24, the position reference, which corresponds to the designated rotational position, as the target position is read out from the storage unit included therein to be output to the position controller 69.

When the rotational position of the rotor hub 13a is designated by the operation unit 24, the position reference unit 68 outputs a switching signal to the switch 70. By the switching signal, the switch 70 switches the torque reference input to the voltage reference generator 62 from the torque reference generating in the torque reference generator 61 to the torque reference generating in the position controller 69.

The position controller 69 acquires a position reference output from the position reference unit 68, acquires a detected position output from the position detector 16, and further acquires a detected speed output from the speed detector 18. The position controller 69 outputs a torque reference causing the rotational position of the wind turbine 14 to coincide with the target position specified by the position reference based on the position reference, the detected position, and the detected speed. FIG. 11 is a diagram illustrating an example of the configuration of the position controller 69.

As illustrated in FIG. 11, the position controller 69 includes subtracters 81 and 83, and PI amplifiers 82 and 84. The subtracter 81 inputs a position difference signal generated by subtracting a detected position from the position reference to the PI amplifier 82. That is, the subtracter 81 compares a target value specified by the position reference with the current rotational position of the wind turbine 14 and outputs a difference between the target value and the rotational position of the wind turbine 14 as the position difference signal.

The PI amplifier 82 amplifies the position difference signal output from the subtracter 81 with PI (proportional integral) operation to convert it to a speed signal, and outputs the speed signal to the subtracter 83. The subtracter 83 acquires the speed signal output from the PI amplifier 82 and acquires the detected speed output from the speed detector 18. The subtracter 83 inputs a speed difference signal generated by subtracting the detected speed from the speed signal to the PI amplifier 84.

The PI amplifier 84 acquires the speed difference signal output from the subtracter 83, amplifies the speed difference signal with PI (proportional integral) operation and converts it to the torque reference, and outputs the torque reference to the switch 70 (refer to FIG. 3 and FIG. 9).

As illustrated in FIG. 3 and FIG. 9, the torque reference output from the position controller 69 is input to the switch 70, and output to the voltage reference generator 62. The voltage reference generator 62 generates the voltage reference according to the torque reference input from the position controller 69 and outputs the voltage reference to the control signal generator 67. Accordingly, electric power conversion from the power grid 30 to the generator 15 is performed, and the wind turbine 14 moves to and stops at the target position designated by the operation unit 24.

Accordingly, the matrix converter apparatus for wind-power generation 20 may cause the rotational position of the wind turbine 14 to coincide with the target position designated by an operation by the operation unit 24 by being provided with the position reference unit 68 and the position controller 69, without using a crane or a hydraulic power unit. Accordingly, the blade 13b can be easily attached or removed after the wind turbine 14 is stopped, whereby workability of installing operation or maintenance work of the wind power generator 10 can be improved.

After the rotational position of the wind turbine 14 reaches the target position, the position controller 69 keeps outputting the control signal based on the rotational position and the target position of the wind turbine 14 from the control signal generator 67 to the matrix converter 21. Accordingly, after the rotational position of the wind turbine 14 reaches the target position, the rotational position of the wind turbine 14 can remain stationary at the target position.

The wind power generator 10 includes a fixation mechanism for fixing the position of the blade 13b to stop the wind turbine 14 more stably in case of strong wind or the like. Herein, a lock pin (not illustrated) for fixing the rotor hub 13a is provided as a fixation mechanism. Accordingly, the blade 13b can be more easily attached or removed, and workability of installing operation or maintenance work of the wind power generator 10 can be further improved. In the matrix converter 21, current does not concentrate on specific bidirectional switches 53a to 53f therein even in a stationary state where the rotational position of the wind turbine 14 is maintained, so that a stable stationary operation not exceeding thermal rating of the bidirectional switches 53a to 53f can be achieved.

When a predetermined operation is performed on the operation unit 24, wind turbine position control is terminated. However, the wind turbine position control is not limited thereto. For example, a detector may be provided to detect attachment or removal of the blade 13b, and the rotational position control for wind turbine may be terminated when the attachment or removal of the blade 13b is detected by the detector.

In the position controller 69, the torque reference may be adjusted according to the number of blades 13b attaching to the rotor hub 13a or a pitch (angle) of the blade 13b. In this case, a blade number detector for detecting the number of attaching blades 13b and a pitch changing mechanism for changing a pitch of the blade 13b are provided. The position controller 69 adjusts the torque reference according to information about the number of blades output from the blade number detector or information about the pitch output from the pitch changing mechanism.

As described above, the torque reference may be generated in consideration of not only the detected position or the detected speed but also airflow volume, a wind direction, the number of blades 13b to be attached, a pitch of the blade 13b, and the like. Accordingly, the rotational position of the wind turbine 14 can be changed to the target position more quickly, and the wind turbine 14 can remain stationary at the rotational position more stably.

When the rotor 13 of the wind turbine 14 rotates abruptly in moving the wind turbine 14 to the target position, the generator 15 is stressed. The stress can be suppressed by limiting the rotational speed of the wind turbine 14. For example, the rotational speed of the wind turbine 14 can be reduced by providing a limiting circuit for limiting the torque reference output from the position controller 69 less than a predetermined value. A gain of the PI amplifier 82 or the PI amplifier 84 may be adjusted by operating the operation unit 24.

When the wind turbine 14 is assembled, the controller 22 can perform control for changing the rotational position of the wind turbine 14 to the target position at which the blade 13b is attached. For example, when the controller 22 determines that the blade 13b is attached after causing the rotational position of the wind turbine 14 to coincide with the target position designated by the operation unit 24, the controller 22 may perform control for changing the rotational position of the wind turbine 14 to the target position to which the remaining blade 13b is attached. Accordingly, assembly work of the wind turbine 14 can be performed more quickly. In this case, for example, a detection unit for detecting attachment of the blade 13b is provided to the wind turbine 14, and the attachment of the blade 13b is confirmed according to the detection result by the detection unit.

### (Residual power discharge control)

Next, the residual power discharge control performed by the controller 22 will be described. The residual power discharge control is control for discharging residual power when the residual power is generated. Residual generated power is generated, for example, when the number of rotations of the wind turbine 14 is increased by a rush of wind or when power failure occurs in the power grid 30. In order to perform the residual power discharge control as described above, as illustrated in FIG. 3 and FIG. 9, the controller 22 includes the generated voltage detector 71 and the discharge command unit 72.

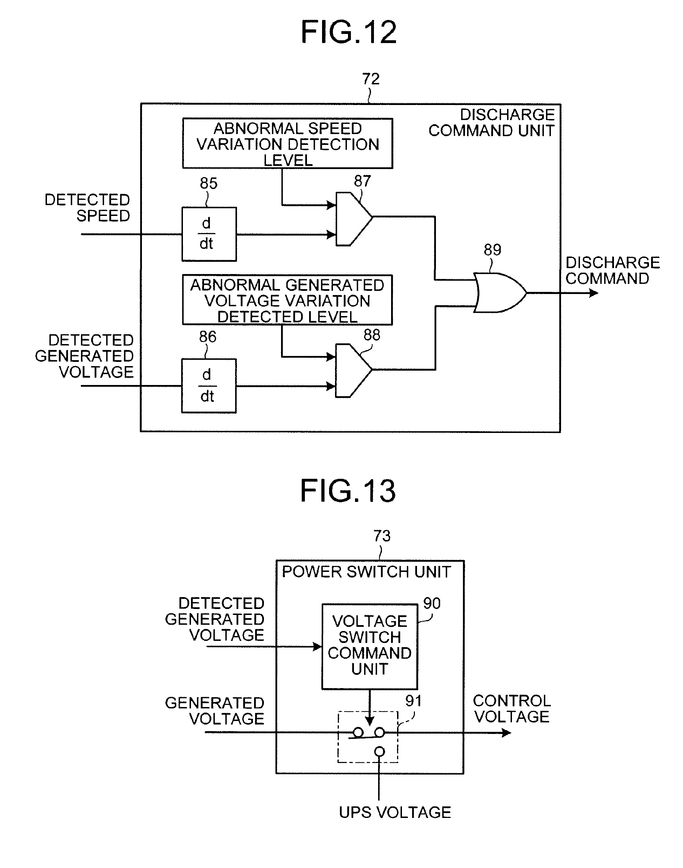

The discharge command unit 72 judges whether the residual generated power is generated based on the detected speed output from the speed detector 18 and the detected generated voltage output from the generated voltage detector 71. When confirming that the residual generated power is generated, the discharge command unit 72 outputs a discharge command to the matrix converter 21. FIG. 12 is a diagram illustrating an example of the configuration of the discharge command unit 72.

As illustrated in FIG. 12, the discharge command unit 72 includes differentiating circuits 85 and 86, comparators 87 and 88, and an logical sum circuit 89. The detected speed output from the speed detector 18 is differentiated by the differentiating circuit 85 and output as a speed variation value. The speed variation value output from the differentiating circuit 85 is input to the comparator 87, and compared with a preset abnormal speed variation detection level by the comparator 87. When the speed variation value output from the differentiating circuit 85 is higher than the speed abnormal variation detection level, the comparator 87 outputs an H-level signal.

The detected generated voltage output from the generated voltage detector 71 is differentiated by the differentiating circuit 86, and output as a generated voltage variation value. The generated voltage variation value output from the differentiating circuit 86 is input to the comparator 88, and compared with a preset abnormal generated voltage variation detection level by the comparator 88. When the generated voltage variation value output from the differentiating circuit 86 is higher than the abnormal generated voltage variation detection level, the comparator 88 outputs the H-level signal.

When the H-level signal is output from any of the comparator 87 and the comparator 88, the logical sum circuit 89 outputs a discharge command of the H-level signal. For example, when the number of rotations of the wind turbine 14 is increased by a rush of wind and residual generated power is generated because the matrix converter 21 and the power grid 30 are separated by a switch or the like (not illustrated), the discharge command unit 72 outputs the discharge command to the matrix converter 21.

The discharge command is input to the single-phase matrix converters 43a to 43c (refer to FIG. 4). Specifically, the discharge command is input to the discharge circuit 56 of the snubber circuit 52 included in the single-phase matrix converters 43a to 43c. As a result, each discharge circuit 56 becomes ON state and the residual generated power is consumed by each discharge circuit 56. Specifically, since the series-connected multi-level matrix converter includes a plurality of single-phase matrix converters, the residual generated power can be dispersively consumed by the snubber circuit 52 of each of the single-phase matrix converters 43a to 43c.

As described above, the matrix converter apparatus for wind-power generation 20 outputs the discharge command for instructing discharge of direct-current voltage to the snubber circuit 52 even when the residual generated power is generated by a rush of wind or separation from the power grid 30. Accordingly, the residual generated power can be consumed by the snubber circuit 52. Therefore, it is possible to protect or continue to operate the matrix converter apparatus for wind-power generation 20.

In the above description, the residual generated power is consumed by the snubber circuit 52. However, the residual generated power can be charged in a storage battery of the UPS 23. In this case, when the discharge command is input, a charger is provided that converts output alternating-current voltage of the generator 15 to direct-current voltage and inputs the direct-current voltage to the storage battery of the UPS 23. Alternatively, the direct-current voltage of the capacitor C2 (refer to FIG. 6) of the snubber circuit 52 can be supplied to the storage battery of the UPS 23 via an insulating member without providing the charger.

The discharge command unit 72 may cause the residual generated power to be consumed by the snubber circuit 52 and also to be charged in the storage battery of the UPS 23. For example, when the residual generated power is less than a threshold value, the discharge command unit 72 outputs the discharge command to one of the snubber circuit 52 and the above-described charger, and causes the snubber circuit 52 or the UPS 23 to consume the residual generated power. When the residual generated power is equal to or more than a predetermined value, the discharge command unit 72 outputs the discharge command to both the snubber circuit 52 and the charger, and causes the snubber circuit 52 and the UPS 23 to consume the residual generated power.

A ratio between the electric power consumed by the snubber circuit 52 and the electric power consumed by the USP 23 may be changed corresponding to the magnitude of the residual generated power. When the storage battery of the USP 23 is fully charged, electric power consumption in the UPS 23 may not be performed.

In the above example, the residual generated power is consumed by the discharge circuit 56. However, a discharge circuit for consuming the residual generated power may be provided separately from the discharge circuit 56. Alternatively, to consume the residual generated power, two or more discharge circuits are prepared and a discharge circuit that inputs the discharge command may be selected corresponding to the magnitude of the residual generated power. Although the discharge command unit 72 detects the residual power when the speed variation or the generated voltage variation becomes equal to or more than the threshold value, the residual power may be detected when the rotational speed of the wind turbine 14 or the voltage generated by the generator 15 becomes equal to or more than the threshold value.

### (Power switching control)

Next, the power switching control performed by the controller 22 will be described. To perform the power switching control, as illustrated in FIG. 3 and FIG. 9, the controller 22 includes the generated voltage detector 71 and the power switch unit 73.

As described above, the generated voltage detector 71 detects a voltage value of the voltage generated by the generator 15 and outputs the detected voltage value as the detected generated voltage to the power switch unit 73. The power switch unit 73 acquires the detected generated voltage output from the generated voltage detector 71, and determines whether the power switching is required based on the detected generated voltage. FIG. 13 is a diagram illustrating an example of the configuration of the power switch unit 73.

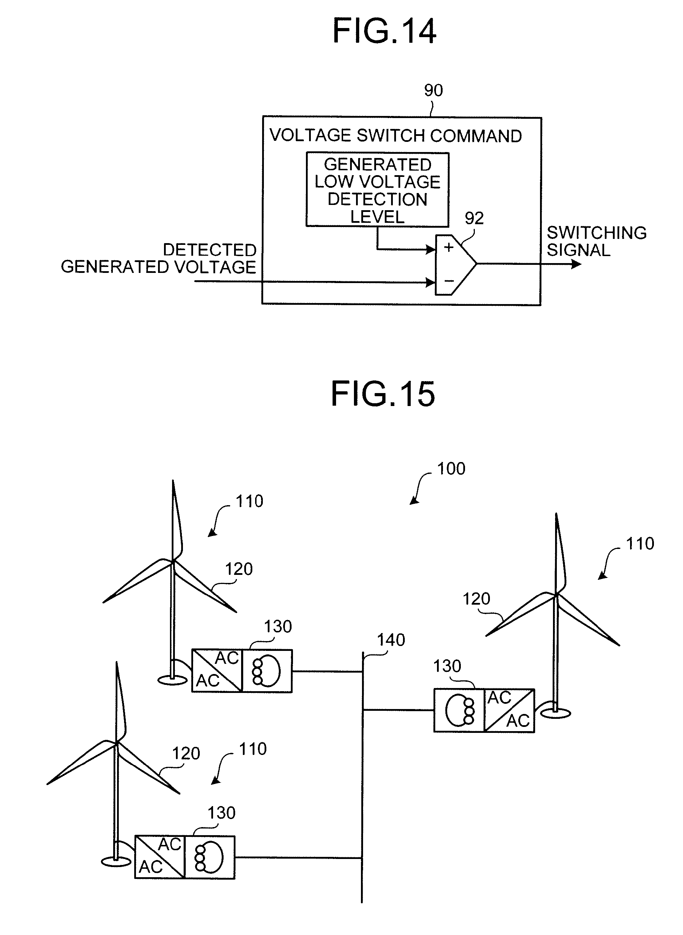

As illustrated in FIG. 13, the power switch unit 73 includes a voltage switch command unit 90 and a switch 91. The voltage switch command unit 90 controls the switch 91 based on the detected generated voltage output from the generated voltage detector 71. FIG. 14 is a diagram illustrating an example of a configuration of the voltage switch command unit 90 illustrated in FIG. 13.

As illustrated in FIG. 14, the voltage switch command unit 90 includes a comparator 92 and compares the detected generated voltage with a generated low voltage detection level by the comparator 92. When the detected generated voltage is lower than the generated low voltage detection level, a switch command signal (H-level signal) is output to the switch 91 from the comparator 92. On the other hand, when the detected generated voltage is equal to or more than the generated low voltage detection level, an L-level signal is output to the switch 91 from the comparator 92 and the switch command signal is not output.

When the switch command signal is not output from the power switch unit 73, the switch 91 illustrated in FIG. 13 outputs the generated voltage of the generator 15 as control voltage for operating the controller 22. On the other hand, when the switch command signal is output from the power switch unit 73, the switch 91 outputs the output voltage of the UPS 23 as the control voltage for operating the controller 22.

Herein, the generated low voltage detection level is set to a value in which the output voltage of the UPS 23 is selected as the control voltage when the control voltage for operating the controller 22 cannot be secured by the generated voltage of the generator 15. Therefore, the generated voltage of the generator 15 is supplied as the control voltage when the generated voltage of the generator 15 can secure the control voltage due to strong wind, and the voltage of the UPS 23 is supplied as the control voltage when the generated voltage of the generator 15 cannot secure the control voltage due to weak wind.

Since the controller 22 performs the power switching control corresponding to the generated voltage of the generator 15 as described above, the control voltage is supplied to the controller 22 regardless of power generation state of the generator 15. Therefore, the matrix converter apparatus for wind-power generation 20 can be stably operated.

When the generated voltage of the generator 15 can sufficiently secure the control voltage due to strong wind, the generated voltage of the generator 15 may be output to the UPS 23. Accordingly, the storage battery of the UPS 23 may be charged by the generated voltage of the generator 15, and the matrix converter apparatus for wind-power generation 20 can be operated more stably.

In the above example, the power switch unit 73 outputs the switching signal to the switch 91 based on the generated voltage of the generator 15. Alternatively, the switching signal may be output to the switch 91 based on the rotational speed of the generator 15. In this case, for example, the power switch unit 73 compares a rotational speed value output from the speed detector 18 with a low rotational speed detection level to output the switching signal.

### (Second embodiment)

In the first embodiment, the wind-power generator apparatus 1 including the wind power generator 10 and the matrix converter apparatus for wind-power generation 20 has been described. In a second embodiment, a wind farm in which a plurality of wind-power generator apparatuses are installed will be described. FIG. 15 is a diagram illustrating the configuration of the wind farm according to the second embodiment.

As illustrated in FIG. 15, a plurality of wind-power generator apparatuses 110 are provided in a wind farm 100 according to the second embodiment, and each of the wind-power generator apparatuses 110 is connected to a power line 140. Each of the wind-power generator apparatuses 110 includes a wind power generator 120 and a matrix converter apparatus for wind-power generation 130.

Herein, each of the wind-power generator apparatuses 110 has the same configuration as that of the wind-power generator apparatus 1 according to the above-described first embodiment. That is, the wind power generator 120 has the same configuration as that of the wind power generator 10, and the matrix converter apparatus for wind-power generation 130 has the same configuration as that of the matrix converter apparatus for wind-power generation 20.

The voltage output to the power line 140 by the matrix converter apparatus for wind-power generation 130 matches the voltage of the power grid. That is, the power converter is, for example, the series-connected multi-level matrix converter in the matrix converter apparatus for wind-power generation 130. In addition, a transformer included in the series-connected multi-level matrix converter (refer to three-phase transformer 42 illustrated in FIG. 4) has a transformer ratio such that rated voltage on a primary side matches the voltage of the power grid. Accordingly, the matrix converter apparatus for wind-power generation 130 can be directly connected to the power line 140.

Therefore, when the series-connected multi-level matrix converter is used as the power converter of the matrix converter apparatus for wind-power generation 130, no need for another transformer enables simplified configuration and space saving.

The transformer included in the series-connected multi-level matrix converter may be provided with a plurality of taps on the primary winding. A connection to the power grid having different voltage can be achieved by selecting a tap corresponding to the voltage of the power grid and connecting the selected tap to the power line 140, while achieving the simplified configuration and the space saving.

The rotational position of the wind turbine is controlled by operating the generator of the wind power generator 120 as a motor, so that the blade may be easily attached or removed, and improvement in efficiency of construction work and reduction of the construction period of the entire wind farm may be achieved.

Further effect or modification may be easily derived by those skilled in the art. Thus, more extensive aspect of the present invention is not limited to the specified details and the exemplary embodiments as illustrated and described above. Therefore, various modifications may be made without departing from the summative spirit or scope of the concept of the invention defined by appended claims and equivalents thereof.

### Reference Signs List

- 1, 110: Wind-power generator apparatus
- 10, 120: Wind power generator
- 14: Wind turbine
- 15: Generator
- 20, 130: Matrix converter apparatus for wind-power generation
- 21: Matrix converter
- 43a to 43c: Single-phase matrix converter
- 22: Controller
- 23: UPS (uninterruptible power supply)
- 30: Power grid
- 42: Three-phase transformer
- 52: Snubber circuit
- 66: Power factor controller
- 70: Switch
- 73: Power switch unit
- 74: Power failure detector
- 76: Grid voltage waveform storage unit
- 77: Power factor setting unit

## Claims

1. A matrix converter apparatus for wind-power generation comprising:
a matrix converter that fully converts electric power generated in a generator by rotating force of a wind turbine rotated by wind power and supplies the electric power to a power grid; and
a controller that controls the matrix converter.

2. The matrix converter apparatus for wind-power generation according to claim 1, wherein
the controller comprises:
a voltage phase generator that generates information about a voltage phase of the power grid or information about a voltage phase of the generator from voltage of the power grid or voltage of the generator;
a power factor setting unit that sets a power-grid-side power factor; and
a power factor controller that adds the information about the voltage phase to the power factor set by the power factor setting unit to generates information about a current phase, and
the controller generates a control signal for controlling the matrix converter based on the information about the current phase.

3. The matrix converter apparatus for wind-power generation according to claim 2, wherein
the controller comprises:
a power failure detector that detects whether power failure occurs in the power grid;
a state quantity acquisition unit that acquires three or more state quantities among two power-grid-side, which are a value of current flowing between the power grid and the matrix converter and a value of voltage of the power grid, and two generator-side state quantities, which are a value of current flowing between the generator and the matrix converter and a value of voltage of the generator; and
a state quantity switching unit that switches a combination of the power-grid-side state quantity and the generator-side state quantity among the three or more state quantities acquired by the state quantity acquisition unit based on a detection result by the power failure detector, and
the controller generates a control signal for controlling the matrix converter based on output of the state quantity switching unit.

4. The matrix converter apparatus for wind-power generation according to claim 3, wherein
the state quantity switching unit outputs a voltage value of the power grid as a detected voltage to the voltage phase generator when the power failure detector detects no power failure in the power grid, and outputs a voltage value of the generator as a detected voltage to the voltage phase generator when the power failure detector detects power failure in the power grid,
the voltage phase generator generates information about the voltage phase from the detected voltage, and
when the power failure detector detects power failure in the power grid, the power factor controller calculates a power failure power factor instead of the power factor set in the power factor setting unit, and adds the power failure power factor to the information about the voltage phase to generate the information about the current phase.

5. The matrix converter apparatus for wind-power generation according to claim 3, wherein
the state quantity switching unit outputs a value of current flowing between the generator and the matrix converter as a detected current value when the power failure detector detects no power failure in the power grid, and outputs a value of current flowing between the power grid and the matrix converter as a detected current value when the power failure detector detects power failure in the power grid, and
the controller generates a control signal for controlling the matrix converter based on the detected current value output from the state quantity switching unit.

6. The matrix converter apparatus for wind-power generation according to any one of claims 1 to 5, wherein
the matrix converter comprises:
a plurality of single-phase matrix converters serially connected to the respective phases of the generator to perform bidirectional electric power conversion; and
a combining part that electrically insulates and combines electric power output from each of the single-phase matrix converters, wherein
the combining part boosts voltage of the combined electric power to voltage of the power grid by being providing with winding on the power grid side.

7. The matrix converter apparatus for wind-power generation according to any one of claims 1 to 5, wherein the matrix converter is a parallel multiplex electric power converter in which a plurality of matrix converters are connected in parallel.

8. The matrix converter apparatus for wind-power generation according to claim 6, wherein
each of the single-phase matrix converters comprises a snubber circuit that converts surge voltage to direct-current voltage and accumulates the direct-current voltage, and discharges the accumulated direct-current voltage, and
the controller comprises a discharge command unit that outputs a discharge command to instruct discharge of the direct-current voltage to the snubber circuit based on the rotational speed of the generator or voltage generated by the generator.

9. The matrix converter apparatus for wind-power generation according to claim 8, further comprising:
an uninterruptible power supply that includes a storage battery and supplies electric power from the storage battery to the controller when a predetermined condition is satisfied, wherein
the storage battery is charged by the direct-current voltage of the snubber circuit.

10. The matrix converter apparatus for wind-power generation according to any one of claims 1 to 5, further comprising:
an uninterruptible power supply;
a switch unit that switches voltage output from the uninterruptible power supply and voltage output from the generator in accordance with a switching signal and outputs the switched voltage as voltage for operating the controller; and
a power switching unit that outputs the switching signal to the switch unit based on the voltage generated by the generator.

11. The matrix converter apparatus for wind-power generation according to any one of claims 1 to 5, wherein
the controller comprises a grid voltage waveform storage unit that stores therein a voltage waveform of the power grid for predetermined cycles, and
when power failure in the power grid is detected while the matrix converter is caused to perform electric power conversion from the generator to the power grid, the controller controls the matrix converter based on a voltage waveform stored in the grid voltage waveform storage unit to continue the electric power conversion from the generator to the power grid.

12. The matrix converter apparatus for wind-power generation according to any one of claims 1 to 5, wherein the controller controls the matrix converter to control a rotational position of the wind turbine by using the generator as a motor.

13. The matrix converter apparatus for wind-power generation according to claim 12, wherein the controller controls ON/OFF of a plurality of switches included in the matrix converter so that the rotational position of the wind turbine is maintained.

14. A wind-power generator apparatus comprising:
a matrix converter that fully converts electric power generated in a generator by rotating force of a wind turbine rotated by wind power to be supplied to a power grid; and
a controller that controls the matrix converter.

15. A wind farm comprising a plurality of wind-power generator apparatuses, wherein
the wind-power generator apparatus comprises:
a matrix converter that fully converts electric power generated in a generator by rotating force of a wind turbine rotated by wind power to be supplied to a power grid; and
a controller that controls the matrix converter.

16. A method for manufacturing a wind turbine in the wind-power generator apparatus according to claim 14 or 15, the method comprising:
detecting a rotational position of the wind turbine of the wind-power generator apparatus by a position detector,
detecting a difference between the detected rotational position of the wind turbine and a designated target position,
using the generator as a motor and causing the rotational position of the wind turbine to coincide with the target position based on the difference between the detected rotational position of the wind turbine and the target position, and
attaching a blade to the wind turbine of which rotational position is caused to coincide with the target position.

## Amended claims

### Amended claims under Art. 19.1 PCT

**1.** (Deleted)

**2.** (Amended) The matrix converter apparatus for wind-power generation comprising:
a matrix converter that fully converts electric power generated in a generator by rotating force of a wind turbine rotated by wind power and supplies the electric power to a power grid; and
a controller that controls the matrix converter, wherein
the controller comprises:
a voltage phase generator that generates information about a voltage phase of the power grid or information about a voltage phase of the generator from voltage of the power grid or voltage of the generator;
a power factor setting unit that sets a power-grid-side power factor; and
a power factor controller that adds the information about the voltage phase to the power factor set by the power factor setting unit to generate information about a current phase, and
the controller generates a control signal for controlling the matrix converter based on the information about the current phase.

**3.** The matrix converter apparatus for wind-power generation according to claim 2, wherein
the controller comprises:
a power failure detector that detects whether power failure occurs in the power grid;
a state quantity acquisition unit that acquires three or more state quantities among two power-grid-side state quantities, which are a value of current flowing between the power grid and the matrix converter and a value of voltage of the power grid, and two generator-side state quantities, which are a value of current flowing between the generator and the matrix converter and a value of voltage of the generator; and
a state quantity switching unit that switches a combination of the power-grid-side state quantity and the generator-side state quantity among the three or more state quantities acquired by the state quantity acquisition unit based on a detection result by the power failure detector, and
the controller generates a control signal for controlling the matrix converter based on output of the state quantity switching unit.

**4.** The matrix converter apparatus for wind-power generation according to claim 3, wherein
the state quantity switching unit outputs a voltage value of the power grid as a detected voltage to the voltage phase generator when the power failure detector detects no power failure in the power grid, and outputs a voltage value of the generator as a detected voltage to the voltage phase generator when the power failure detector detects power failure in the power grid,
the voltage phase generator generates information about the voltage phase from the detected voltage, and
when the power failure detector detects power failure in the power grid, the power factor controller calculates a power-failure power factor instead of the power factor set in the power factor setting unit, and adds the power-failure power factor to the information about the voltage phase to generate the information about the current phase.

**5.** The matrix converter apparatus for wind-power generation according to claim 3, wherein
the state quantity switching unit outputs a value of current flowing between the generator and the matrix converter as a detected current value when the power failure detector detects no power failure in the power grid, and outputs a value of current flowing between the power grid and the matrix converter as a detected current value when the power failure detector detects power failure in the power grid, and
the controller generates a control signal for controlling the matrix converter based on the detected current value output from the state quantity switching unit.

**6.** (Amended)
The matrix converter apparatus for wind-power generation according to any one of claims 2 to 5, wherein
the matrix converter comprises:
a plurality of single-phase matrix converters serially connected to the respective phases of the generator to perform bidirectional electric power conversion; and
a combining part that electrically insulates and combines electric power output from each of the single-phase matrix converters, wherein
the combining part boosts voltage of the combined electric power to voltage of the power grid by being providing with winding on the power grid side.

**7.** (Amended) The matrix converter apparatus for wind-power generation according to any one of claims 2 to 5, wherein the matrix converter is a parallel multiplex electric power converter in which a plurality of matrix converters are connected in parallel.

**8.** The matrix converter apparatus for wind-power generation according to claim 6, wherein
each of the single-phase matrix converters comprises a snubber circuit that converts surge voltage to direct-current voltage and accumulates the direct-current voltage, and discharges the accumulated direct-current voltage, and
the controller comprises a discharge order unit that outputs an electric discharge order to instruct discharge of the direct-current voltage to the snubber circuit based on the rotational speed of the generator or voltage generated by the generator.

**9.** The matrix converter apparatus for wind-power generation according to claim 8, further comprising:
an uninterruptible power supply that includes a storage battery and supplies electric power from the storage battery to the controller when a predetermined condition is satisfied, wherein
the storage battery is charged by the direct-current voltage of the snubber circuit.

**10.** (Amended)
The matrix converter apparatus for wind-power generation according to any one of claims 2 to 5, further comprising:
an uninterruptible power supply;
a switch unit that switches voltage output from the uninterruptible power supply and voltage output from the generator in accordance with a switching signal and outputs the switched voltage as voltage for operating the controller; and
a power voltage switch unit that outputs the switching signal to the switch unit based on the voltage generated by the generator.

**11.** (Amended) The matrix converter apparatus for wind-power generation according to any one of claims 2 to 5, wherein
the controller comprises a system voltage waveform storage unit that stores therein a voltage waveform of the power grid for predetermined cycles, and
when power failure in the power grid is detected while the matrix converter is caused to perform electric power conversion from the generator to the power grid, the controller controls the matrix converter based on a voltage waveform stored in the system voltage waveform storage unit to continue the electric power conversion from the generator to the power grid.

**12.** (Amended) The matrix converter apparatus for wind-power generation according to any one of claims 2 to 5, wherein the controller controls the matrix converter to control a rotational position of the wind turbine by using the generator as a motor.

**13.** The matrix converter apparatus for wind-power generation according to claim 12, wherein the controller controls ON/OFF of a plurality of switches included in the matrix converter so that the rotational position of the wind turbine is maintained.

**14.** (Amended) A wind-power generator apparatus comprising:
a matrix converter that fully converts electric power generated in a generator by rotary power of a wind turbine rotated by wind power to be supplied to an power grid; and
a controller that controls the matrix converter, wherein
the controller comprises:
a voltage phase generator that generates information about a voltage phase of the power grid or information about a voltage phase of the generator from voltage of the power grid or voltage of the generator;
a power factor setting unit that sets a power-grid-side power factor; and
a power factor controller that adds the information about the voltage phase to the power factor set by the power factor setting unit to generate information about an current phase, and
the controller generates a control signal for controlling the matrix converter based on the information about the current phase.

**15.** (Amended) A wind farm comprising a plurality of wind-power generator apparatuses, wherein
each of the wind-power generator apparatuses comprises:
a matrix converter that fully converts electric power generated in a generator by rotary power of a wind turbine rotated by wind power and supplies the electric power to an power grid; and
a controller that controls the matrix converter, wherein
the controller comprises:
a voltage phase generator that generates information about a voltage phase of the power grid or information about a voltage phase of the generator from voltage of the power grid or voltage of the generator;
a power factor setting unit that sets a power-grid-side power factor; and
a power factor controller that adds the information about the voltage phase to the power factor set by the power factor setting unit to generate information about an current phase, and
the controller generates a control signal for controlling the matrix converter based on the information about the current phase.

**16.** A method for manufacturing a wind turbine in the wind-power generator apparatus according to claim 14 or 15, the method comprising:
detecting a rotational position of the wind turbine of the wind-power generator apparatus by a position detector,
detecting a difference between the detected rotational position of the wind turbine and a designated target position,
using the generator as a motor and causing the rotational position of the wind turbine to coincide with the target position based on the difference between the detected rotational position of the wind turbine and the target position, and
attaching a blade to the wind turbine of which rotational position is caused to coincide with the target position.

Statement under Art. 19.1 PCT
A description based on the Patent Cooperate Treaty, Article 19(1)

Claim 1 is deleted, and claims 2, 14, and 15 are amended. In claims 6, 7, and 10 to 12, only their dependency is amended. Claims 3 to 5, 8, 9, 13, and 16 are not changed.

With regard to amended claim 2, the limitation of claim 1 before amendment is added to claim 2 before amendment.

With regard to amended claims 15 and 16, the limitation of claim 2 before amendment is added to claims 15 and 16 before amendment.
